# EUROPEAN PATENT APPLICATION

(11) **EP 4 145 698 A1**
(43) Date of publication of application: **08.03.2023**
(21) Application number: 21796031.9
(22) Date of filing: 21.04.2021
(51) Int. Cl.: H02S 20/32

(54) **PHOTOVOLTAIC TRACKING SUPPORT AND TRANSMISSION DEVICE THEREFOR**

(30) Priority: 27.04.2020 CN 202020672094 U
(71) Applicant: Mokun Renewable Technology Co., Ltd., Shanghai 201102 (CN)
(72) Inventor: GUO, Jiabao, Shanghai 201102 (CN); LIU, Xiao, Shanghai 201102 (CN)
(74) Representative: Grünecker Patent- und Rechtsanwälte PartG mbB
(86) International application number: PCT/CN2021/088627
(87) International publication number: WO 2021/218732

(57) **Abstract**

The invention provides a transmission device for a photovoltaic tracking support. The photovoltaic tracking support comprises a column and a shaft, the shaft is rotatably supported on the column and a photovoltaic module is supported by the shaft, wherein the transmission device comprises a combined chain gear set and a combined chain wheel set, the combined chain gear set comprises a plurality of chain gears that are provided coaxially and in a staggered manner with each other, the combined chain wheel set comprises a plurality of chain wheels that are provided coaxially and in one-to-one correspondence with the plurality of chain gears respectively, one of the combined chain gear set and the combined chain wheel set is provided rotatably on the column, the other one is connected to the shaft. The invention further provides a photovoltaic tracking support comprisding the above transmission device. The above transmission device can reduce the swinging amplitude of a photovoltaic tracking support due to the strong wind when applied on the photovoltaic tracking support, reduce the wear and be suitable for the condition without grease lubrication.

## Description

### Technical Field

The invention relates to a photovoltaic tracking support, in particular to a transmission device for the photovoltaic tracking support.

### Background

In photovoltaic solar power generation system, a photovoltaic tracking support such as a flat single-axis tracking support is one of the most commonly used photovoltaic array supports. Since the photovoltaic tracking support can track the change of solar azimuth angle during daytime, the overall amount of annual power generation of the photovoltaic module provided with the photovoltaic tracking support is 15-25% higher than that of the photovoltaic module provided with a fixed support with an optimal tilt angle.

Generally, a driving unit such as a rotary speed reduction motor is provided to drive the photovoltaic tracking support to track and rotate directly, for example, a rotary bearing is mounted directly on the middle part of a rotary shaft of the photovoltaic tracking support, and the rotary bearing is driven by the speed reduction motor to rotate, thereby driving the photovoltaic tracking support to track and rotate. However, this driving method for tracking has some disadvantages. For example, this direct driving method requires a relatively large output torque of the rotary speed reduction motor so that the flat single-axis tracking support can be driven to track and rotate effectively, so the specification of the rotary speed reduction motor selected is relatively large and the cost and power consumption are also relative high. Furthermore, a certain distance needs to be remained on the middle part of the rotary shaft of the photovoltaic tracking support for mounting the rotary speed reduction motor, and the photovoltaic module cannot be mounted thereon, which makes the mounting arrangement of the photovoltaic module on the shaft not compact enough.

The Chinese Utility Model Patent CN209949041U discloses a solution to achieve tracking and driving of a photovoltaic tracking support by sprocket and chain mesh transmission. The inventor believes that compared with using the driving unit to drive the photovoltaic tracking support to track and rotate directly, when the photovoltaic tracking support is driven to track and rotate by sprocket and chain mesh transmission or wheel and chain combination, the chain gear and chain wheel with suitable radius ratio can be selected, so that a driving unit with a small specification such as rotary speed reduction motor can be used to generate a large driving torque, which can save the cost of driving device and reduce the operation energy consumption of driving device. Moreover, when the photovoltaic tracking support is driven to track and rotate by wheel and chain transmission, the mounting arrangement of the photovoltaic module on the shaft of the photovoltaic tracking support can be more compact, which can save cost and reduce the occupied area.

However, the inventor found that when a pair of wheel and chain combination are used as the transmission device to achieve the above tracking drive, that is, when a chain gear is used to match a chain wheel, the photovoltaic tracking support will swing back and forth in the actual working state due to the strong wind, for example, swinging back and forth in the east-west direction. Moreover, since the meshing parts of the chain gear and chain wheel of the photovoltaic tracking support are exposed outside for a long time during the actual operation, they cannot be lubricated effectively and will be wore severely due to the large swing amplitude, which will affect the service life of the photovoltaic tracking support.

The present invention is intended to solve at least one of the problems mentioned above.

### Summary of the invention

One objective of the invention is to provide a transmission device which can reduce the swinging amplitude of a photovoltaic tracking support due to the strong wind when applied on the photovoltaic tracking support.

The other objective of the invention is to provide a transmission device which can reduce the wear and be suitable for the condition without grease lubrication.

The invention provides a transmission device for a photovoltaic tracking support, the photovoltaic tracking support comprises a column and a shaft, the shaft is rotatably supported on the column and a photovoltaic module is supported by the shaft, wherein the transmission device comprises a combined chain gear set and a combined chain wheel set, the combined chain gear set comprises a plurality of chain gears that are provided coaxially and in a staggered manner with each other, the combined chain wheel set comprises a plurality of chain wheels that are provided coaxially and in one-to-one correspondence with the plurality of chain gears respectively, one of the combined chain gear set and the combined chain wheel set is provided rotatably on the column, the other one is connected to the shaft.

In an embodiment, the combined chain gear set comprises a first chain gear and a second chain gear, a centreline of any one of tooth tips on the first chain gear overlaps with a centreline of any one of concave parts on the second chain gear.

In an embodiment, radii of reference circles of the plurality of chain gears are the same.

In an embodiment, numbers of teeth of the plurality of chain gears are the same. In an embodiment, the combined chain gear set comprises a first chain gear, a second chain gear and a third chain gear, a central angle corresponding to any two of the adjacent tooth tips on the first chain gear is divided into three equal portions by a centerline of any one of tooth tips on the second chain gear and a centreline of any one of tooth tips on the third chain gear.

In an embodiment, the plurality of chain gears or the plurality of chain wheels provided on the other one are all sector wheels, connected below the shaft.

In an embodiment, the plurality of chain gears are fixedly connected to each other; and/or the plurality of chain wheels are fixedly connected to each other.

In an embodiment, the combined chain wheel set is provided rotatably on the column, and the combined chain gear set is connected to the shaft.

The invention further provides a photovoltaic tracking support, comprising a column and a shaft, the shaft is rotatably supported on the column and a photovoltaic module is supported by the shaft, whrerein the photovoltaic tracking support further comprises the transmission device mentioned above.

In an embodiment, the photovoltaic tracking support further comprises a driving unit for driving the one to rotate.

The above transmission device is provided with the plurality of chain gears that are arranged in the staggered manner and the plurality of chain wheels meshed with the plurality of chain gears to achieve relay transmission. When the gap between the meshing points of one pair of chain wheel is relatively large, the gap between the meshing points of the other pair of chain wheel will be relatively small, thereby reducing the overall size of the gap of the chain wheel transmission and reducing the variation of the gap. Therefore with the above transmission device, the swinging amplitude of the photovoltaic tracking support due to the strong wind can be effectively reduced, improving the ability of the photovoltaic tracking support to resist the strong wind. Moreover, the above transmission device can also reduce the wear effectively, suitable for the condition without grease lubrication, thereby improving the working performance of the chain wheel transmission in the outdoor condition without grease lubrication, improving the service life of the transmission device and the photovoltaic tracking support greatly.

### Brief description of the drawings

The above and other features, properties, and advantages of the present invention will become more apparent from the following description with reference to the accompanying drawings and embodiments, wherein:
Figrue 1 is a front view of the photovoltaic tracking support.
Figure 2 is a side view of the photovoltaic tracking support.
Figure 3 is a front view of the combined chain gear set.
Figure 4 is a side view of the combined chain gear set.
Figure 5 is a rear view of the combined chain gear set.
Figure 6 is a front view of the combined chain wheel set.
Figure 7 is a side view of the combined chain wheel set.
Figure 8 is a schematic view of the meshing transmission of the chain gear and the chain wheel in the first state.
Figure 9 is a partial enlarged view of the meshing part shown in Figure 8.
Figure 10 is a schematic view of the meshing transmission of the chain gear and the chain wheel in the second state.
Figure 11 is a partial enlarged view of the meshing part shown in Figure 10.

### Preferred embodiments of the invention

The present invention will be further described below with reference to specific embodiments and drawings, and more details are described in the following description to illustrate a thorough understanding of the invention, but it is apparent to those skilled in the art that similar promotion and deduction can be made according to the actual situation of application without departing from the content of the present invention, therefore, the scope of protection of the present invention should not be limited by the contents of this detailed description.

For example, a first feature described to be formed above or on a second feature in the following description may include the embodiment where the first feature and the second feature are formed in a direct contact, and may also include the embodiment where an addition feature is formed between the first feature and the second feature, so that the first feature and the second feature are formed in an indirect contact. Furthermore, when the first feature is described to be connected to or combined with the second feature, the descripition may include the embodiment where the first element and the second element are connected or combined directly, and may also include the embodiment where one or more other intermediate element is added to connect or combine the first element and the second element indirectly.

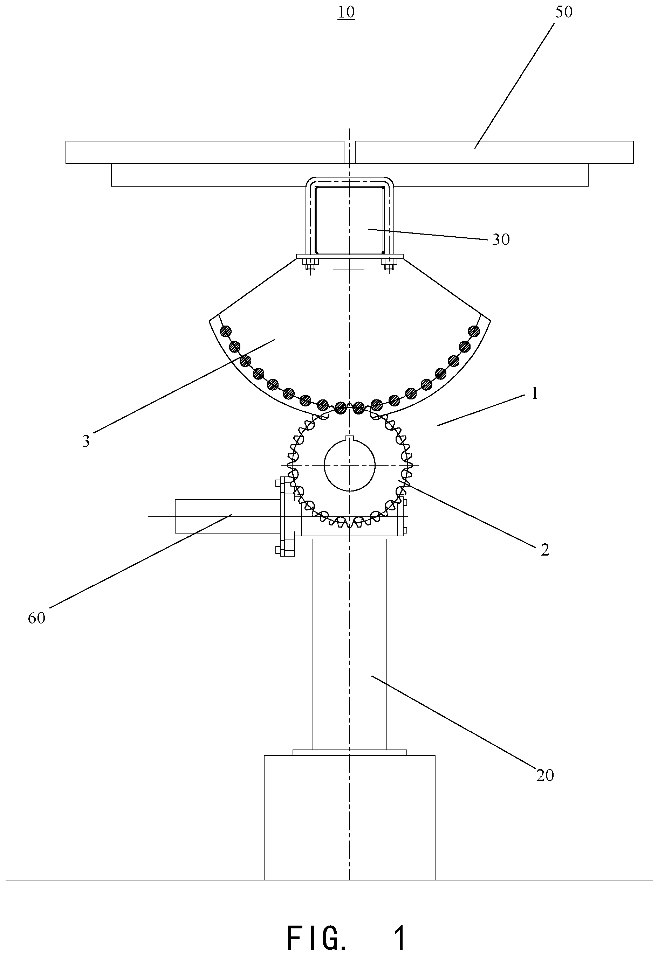

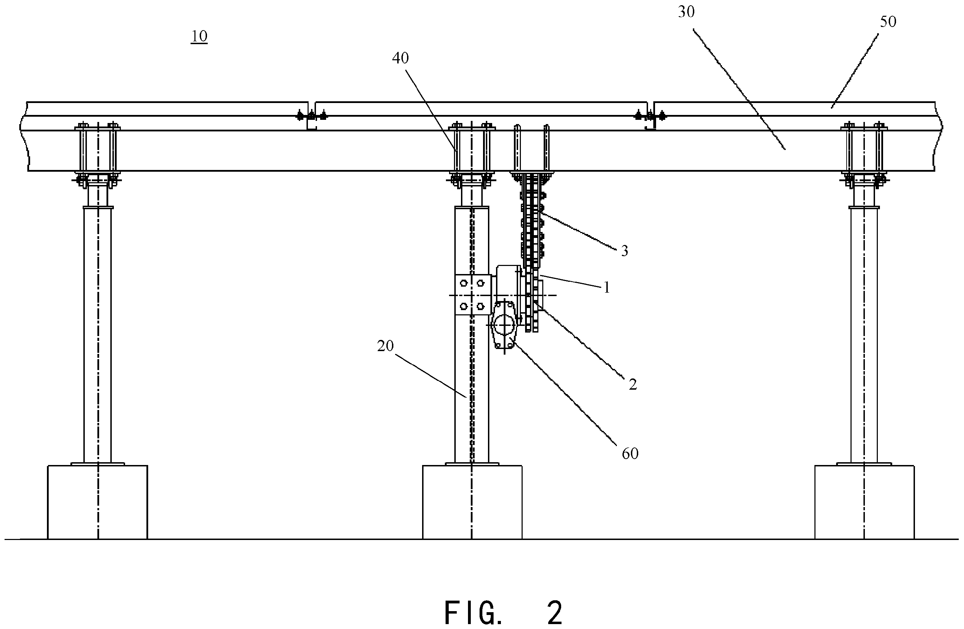

Figure 1 and Figure 2 show a front view and a side view of the photovoltaic tracking support 10 according to the invention, where a flat single-axis tracking support is taken as an example of the photovoltaic tracking support 10. A photovoltaic tracking support 10 comprises a column 20 and a shaft 30. The shaft is rotatably supported on the column 20, such as rotatably supported on the column 20 by a rotary support 40 shown in Figure 2, the rotary support 40 can be for example a rotary bearing. A photovoltaic module 50 can be supported by the shaft 30. As shown in Figure 2, a plurality of columns 20 can be provided on an extending direction of the shaft 30, and three columns 20 are provided at equal distance along the extending direction of the shaft 30 in the figure, where the extending direction of the shaft 30 can be the south-north direction. It should be understood that the figures are merely examples and should not be construed as a limitation of the scope of the present disclosure. In addition, the alternatives in different embodiments can be combined appropriately.

The photovoltaic tracking support 10 may comprises a transmission device 1. The transmission device 1 comprises a combined chain gear set 2 and a combined chain wheel set 3.

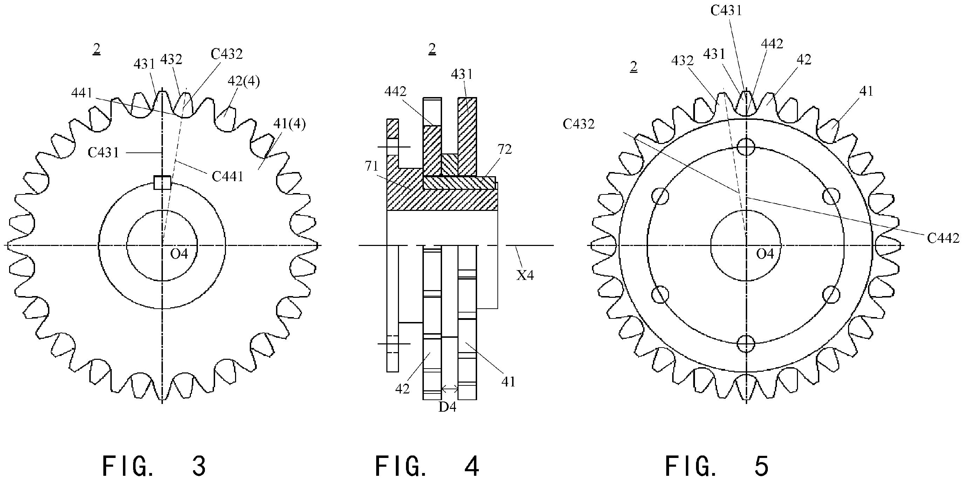

As shown in Figure 3, Figure 4 and Figure 5, the combined chain gear set 2 comprises a plurality of chain gears 4. It should be understood that the term 'a plurality of' means at least one or more than two, including two, three, four, five, etc.. In the embodiment shown in Figure 3 and Figure 5, the combined chain gear set 2 comprises two chain gears 4, which are a first chain gear 41 and a second chain gear 42.

The plurality of chain gears 4 are provided coaxially and in a staggered manner with each other. The term 'in a staggered manner' means that in the plurality of chain gears, the centreline of any one of the tooth tips on one chain gear does not overlap with (or be offset from or intersect with) the centreline of any one of the tooth tips on the other chain gear, or the centreline of any one of the concave parts on one chain gear does not overlap with the centreline of any one of the concave parts on the other chain gear. For example, in the embodiment shown in Figure 3 and Figure 5, the first chain gear 41 and the second chain gear 42 have a common central axis X4, the centreline C431 of the tooth tip 431 on the first chain gear 41 intersects with the centreline C432 of the tooth tip 432 on the second chain gear 42. Figure 3 to Figure 5 also show the concave part 441 on the first chain gear 41 and the centreline C441 of the concave part 441, the concave part 442 on the second chain gear 42 and the centreline C442 of the concave part 442. For example for the first chain gear 41, the term 'the centreline C431 of the tooth tip 431' refers to the connection line between the top of the tooth tip 431 and a centre of rotation 04 (a projection point of the central axis X4 on the plane) on a plane perpendicular to the central axis X4, or the extending line of the connection line, as shown in Figure 3. The term 'the centreline C441 of the concave part 441' refers to the connection line between the bottom of the concave part 441 and the centre of rotation 04 on the plane perpendicular to the central axis X4, or the extending line of the connection line, as shown in Figure 3.

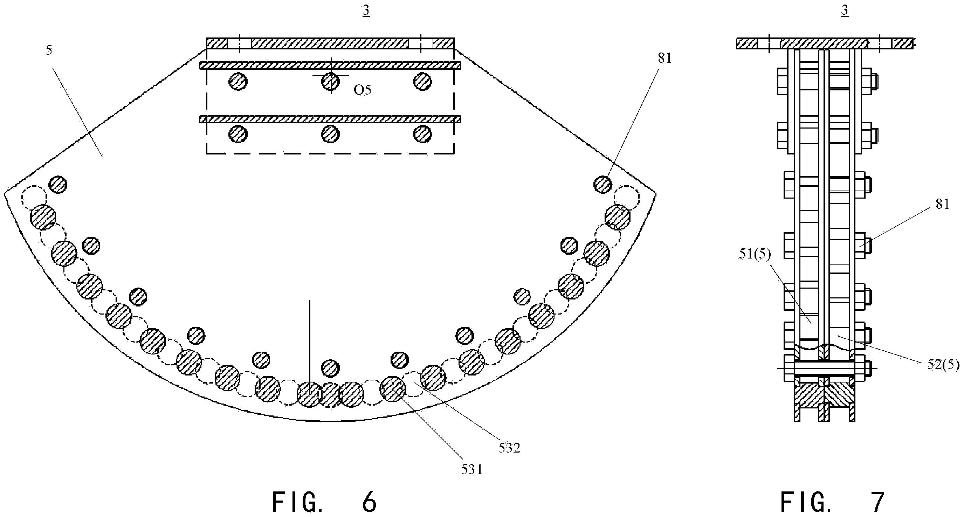

As shown in Figure 6 and Figure 7, the combined chain wheel set 3 comprises a plurality of chain wheels 5. The plurality of chain wheels 5 are provided coaxially and in one-to-one correspondence with the plurality of chain gears 4 mentioned above respectively. As previously mentioned, in the embodiment shown in the figures, the combined chain gear set 2 comprises two chain gears 4, thus in the embodiment shown in Figure 6 and Figure 7, correspondingly, the combined chain wheel set 3 comprises two chain wheels, which are a first chain wheel 51 and a second chain wheel 52 meshed with the first chain gear 41 and the second chain gear 42 respectively for transmission. The first chain wheel 51 and the second chain wheel 52 have a common central axis, which is projected on a vertical plane as a centre of rotation 05, as shown in Figure 6. It can be understood that the first chain gear 41 and the second chain gear 42 are provided in the staggered manner, and the first chain wheel 51 and the second chain wheel 52 meshed with them respectively for transmission are also provided in the staggered manner.

One of the combined chain gear set 2 and the combined chain wheel set 3 mentioned above is provided rotatably on the column 20, the other one is connected to the shaft 30. In the embodiment shown in the figures, taken as an example, the combined chain gear set 2 is the one provided rotatably on the column 20, and the combined chain wheel set 3 is the other one connected to the shaft 30.

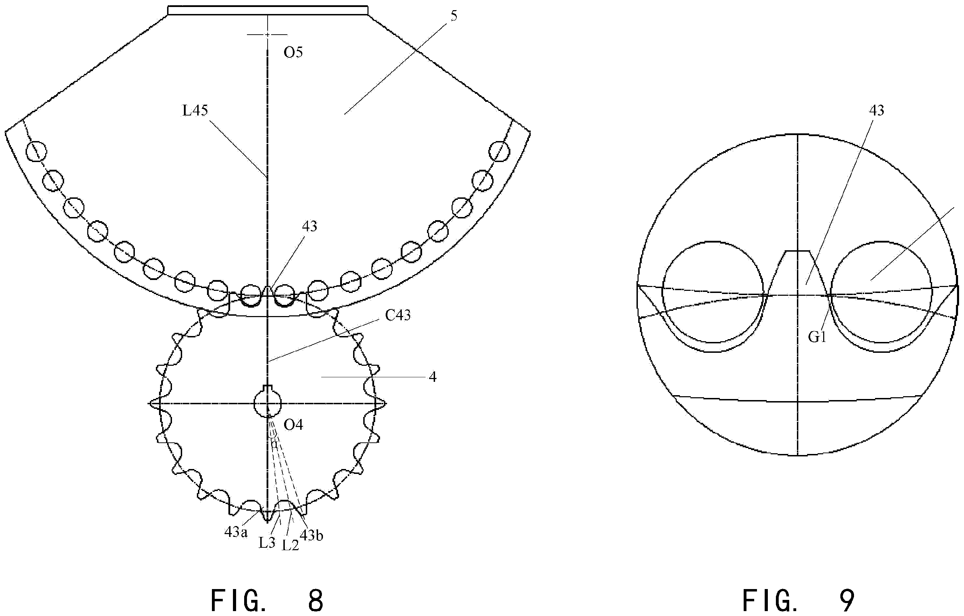

When the transmission part of the chain wheels locates at different positions, the gap between the meshing points of the chain gears 4 and the chain wheels 5 that are meshed for transmission or paired varies continuously, as shown in Figure 8 to Figure 11. It can be understood that in Figure 8 to Figure 11, the chain gears 4 may refer to the first chain gear 41 or the second chain gear 42, etc., the chain wheels 5 may refer to the first chain wheel 51 or the second chain wheel 52, etc. correspondingly, any one of the tooth tips 43 on the chain gears 4 may refer to the tooth tips 431 on the first chain gear 41 or the tooth tips 432 on the second chain gear 42, etc. correspondingly, any one of the concave parts 44 on the chain gears 4 may refer to the concave part 441 on the first chain gear 41 or the concave part 442 on the second chain gear 42, etc. correspondingly, the centreline C43 of the tooth tip 43 may refer to the centreline C431 of the tooth tip 431 on the first chain gear 41 or the centreline C432 of the tooth tip 432 on the second chain gear 42, etc. correspondingly, the centreline C44 of the concave part 44 may refer to the centreline C441 of the concave part 441 on the first chain gear 41 or the centreline C442 of the concave part 442 on the second chain gear 42, etc. correspondingly, a chain pin 53 on the chain wheel 5 may refer to the chain pin 531 on the first chain wheel 51 or the chain pin 532 on the second chain wheel 52, etc. correspondingly.

When the centreline C43 of any one of the tooth tips 43 on the chain gear 4 overlaps with a connection line L45 between the centres of the chain gear 4 and the chain wheel 5, the gap between the meshing points of the chain gear 4 and the chain wheel 5 is the largest, as shown by G1 in Figure 9, which can be refined as a first state, wherein the connection line L45 between the centres of the chain gear 4 and the chain wheel 5 is the connection line between the centre of rotation 04 of the chain gear 4 and the centre of rotation 05 of the chain wheel 5.

When the centreline C44 of any one of the concave parts 44 on the chain gear 4 overlaps with the connection line L45 between the centres of the chain gear 4 and the chain wheel 5, the gap between the meshing points of the chain gear 4 and the chain wheel 5 is the smallest, as shown by G2 in Figure 9, which can be refined as a second state. Therefore during the mesh transmission process of the chain wheels, the size of the gap between the meshing points of the chain gear 4 and the chain wheel 5 varies alternatively.

When the strong wind comes, the larger the gap between the meshing points of the chain gear 4 and the chain wheel 5, the larger the amplitude of the photovoltaic tracking support swinging back and forth in the east-west direction may be generated, otherwise it would be smaller.

In addition, since the size of the gap between the meshing points of the chain gear 4 and the chain wheel 5 varies alternatively, tangential sliding will be generated on a connecting portion of the meshing points of the chain gear 4 and the chain wheel 5 during the transmission process, which will result in local wear on the connecting portion of the chain gear 4 and the chain wheel 5, and the larger the variation of the gap between the meshing points of the chain gear 4 and the chain wheel 5 is, the severer the local wear will be resulted, especially when the lubrication condition of the meshing points is not good.

Therefore, during the transmission process of the chain wheels, the size and the variation of the gap between the meshing points of the chain gear 4 and the chain wheel 5 should be as small as possible.

The transmission device 1 mentioned above is provided with two pairs of chain wheels (the first chain gear 41 and the first chain wheel 51 paired, the second chain gear 42 and the second chain wheel 52 paired) or more pairs of chain wheels that are combined together and arranged in the staggered manner (or staggered combination), with the relay transmission method, when the gap between the meshing points of one pair of chain wheel (for example the first chain gear 41 and the first chain wheel 51) is the largest, the gap between the meshing points of the other pair of chain wheel (for example the second chain gear 42 and the second chain wheel 52) is not the largest, thereby reducing the overall size of the gap of the chain wheel transmission and reducing the variation of the gap, and improving the ability of the photovoltaic tracking support to resist swinging due to the strong wind, improving the working performance of the chain wheel transmission such as in the outdoor condition without grease lubrication, improving the service life of the transmission device greatly.

In the embodiment shown in Figure 3 to Figure 5, the combined chain gear set 2 comprises the the first chain gear 41 and the second chain gear 42, preferably, the centreline C431 of any one of the tooth tips 431 on the first chain gear 41 overlaps with the centreline C442 of any one of the concave parts 442 on the second chain gear 42. It can be understood that the first chain wheel 51 and the second chain wheel 52 of the combined chain wheel set 3 can be provided in the same staggered manner, corresponding to the first chain gear 41 and the second chain gear 42.

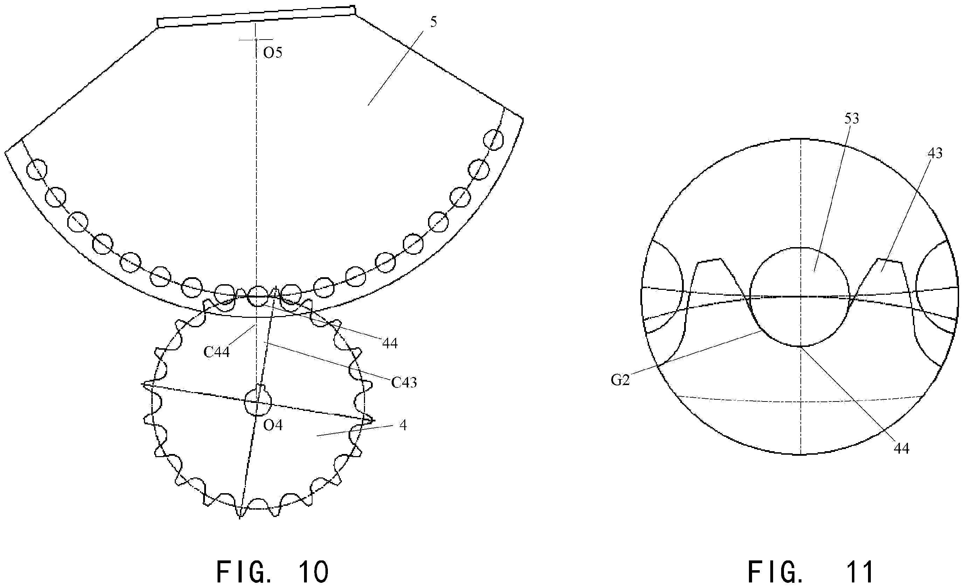

Therefore, when the centreline C43 of any one of the tooth tips 43 on the chain gear 4 overlaps with the connection line L45 between the centres of the chain gear 4 and the chain wheel 5 (in the first state shown in Figure 8 and Figure 9), the centreline C44 of any one of the concave parts 44 on the chain gear 4 overlaps with the connection line L45 between the centres of the chain gear 4 and the chain wheel 5 (in the second state shown in Figure 10 and Figrue 11). For example, when the centreline C431 of the tooth tip 431 on the first chain gear 41 overlaps with the connection line L45 between the centres of the first chain gear 41 and the first chain wheel 51, the centreline C442 of any one of the concave parts 442 on the second chain gear 42 overlaps with the connection line L45 between the centres of the second chain gear 42 and the second chain wheel 52. In other words, when the gap between the meshing points of the first pair of chain wheels is the largest, the gap between the meshing points of second pair of chain wheels is the smallest (or nearly 0). In this case, the variation of the gap between the meshing points of the chain gear and the chain wheel can be controlled within a half cycle range, so the size and variation of the gap of the chain wheel transmission can be reduced significantly, thereby improving the ability of the photovoltaic tracking support 10 to resist swinging due to the strong wind greatly, and improving the working performance of the chain wheel transmission such as in the outdoor condition without grease lubrication effectively, improving the service life of the transmission device 1 greatly.

It can be understood that three or more pairs of chain wheels can be combined together, and the central angle corresponding to two adjacent teeth on the chain gear can be divided into three or more equal portions, each pair of chain wheel corresponds to a portion of the central angle to perform the relay transmission. For example, the combined chain gear set 2 may comprise the first chain gear, the second chain gear and the third chain gear, the central angle corresponding to any two of the adjacent tooth tips on the first chain gear is divided into three equal portions by the centerline of any one of the tooth tips on the second chain gear and the centreline of any one of the tooth tips on the third chain gear. For example, as shown in Figure 8, the chain gear 4 can be regarded as the first chain gear, the central angle α corresponding to the two adjacent tooth tips 43a, 43b is divided into three equal portions by the half-lines L2, L3, the second chain gear and the third chain gear can be provided in a staggered manner, the centerline of any one of the tooth tips on the second chain gear and the centreline of any one of the tooth tips on the third chain gear overlap with the half-lines L2, L3 respectively.

With more pairs of the combined chain wheels, the size and variation of the gap generated during the meshing process will be smaller, and the transmission will be more stable. At the meantime, it should be considered that with more pairs of the combined chain wheels, the size of the transmission mechanism will also become larger and the cost will be higher, therefore, considered in a comprehensive way, the number of the combined chain wheels should not be too many, preferably two orthree pairs.

The chain gear 4 and the chain wheel 5 mentioned above can be a complete circular wheel, or an incomplete sector wheel. In the actual setting, whether to use a circular wheel or a sector wheel can be determined based on the working range of the corresponding working part. For example, if the working range of the working part is larger than a circle (including a circle), a circular wheel is generally used for the chain gear or the chain wheel; if the working range of the working part is less than a circle or even half a circle, a sector wheel is generally used for the chain gear or the chain wheel to reduce the weight. Specifically, the angle of sector of the sector wheel can be designed to be larger than the angle of rotation corresponding to the working range of the working part. For example for the flat single-axis tracking support, the tracking range in the east-west direction of the photovoltaic tracking support generally does not exceed ±60° in the actual operation, so the actual capable tracking range may not exceed ±70°.

In the embodiment shown in the figures, taken as an example, the combined chain wheel set 3 is the other one connected to the shaft 30, the plurality of chain wheels 5 provided thereon are all sector wheels connected below the shaft 30, so that the plurality of chain wheels 5 will not interfere with the photovoltaic module 50 supported by the shaft 30. Similarly, if the combined chain gear set 2 is the other one connected to the shaft 30, the plurality of chain gears 4 provided thereon can also be all sector wheels.

In the embodiment shown in the figures, taken as an example, the combined chain gear set 2 is the one provided rotatably on the column 20, the plurality of chain gears 4 provided thereon are all sector wheels. During the meshing transmission, the angle of rotation of the chain gear 4 in the form of a circular wheel is larger than the angle of rotation of the corresponding chain wheel 5 in the form of a sector wheel, and the transmission ratio is greater than 1.

In the embodiment shown in the figures, the radius of the reference circles of the plurality of chain gears 4 are the same, so as to ensure that the speed ratio of the corresponding pair of chain wheel is the same, realizing synchronous transmission. In the embodiment shown in the figures, the number of teeth of the plurality of chain gears 4 are also the same, so as to achieve the ideal relay transmission mode. As mentioned above, the chain gear 4 can be a sector wheel rather than a circular wheel, it should be understood that when a sector wheel is used for the chain gear 4, 'the number of teeth of the plurality of chain gears 4' refers to the number of teeth on the complete circle when the chain gears 4 in the form of a sector wheel is filled into a complete circular wheel. Further, in the embodiment shown in the figures, the configurations and dimensions of the plurality of chain gears 4 are completely the same.

In the embodiment shown in the figures, the plurality of chain gears 4 can be fixedly connected to each other. The plurality of chain wheels 5 can also be fixedly connected to each other. For example in Figure 4, the first chain gear 41 and the second chain gear 42 are fixed in series by a coupling shaft 71 with a key groove inserted through the center and a key 72 inserted into the key groove provided on the coupling shaft 71 to prevent rotation. In Figure 7, the first chain wheel 51 and the second chain wheel 52 are fixed in series by a fastener 81 such as a bolt.

The plurality of chain gears 4 are provided with an axial gap between each other. In the embodiment shown in Figure 4, an axial gap D4 is provided between the first chain gear 41 and the second chain gear 42.

Referring to Figure 1 and Figure 2, the photovoltaic tracking support 10 further comprises a driving unit 60 for driving the rotation of the combined chain gear set 2 that is taken as an example of the one mention above. The driving unit 60 for example can be a rotary speed reduction motor, comprising a rotary bearing, a speed reducer and a motor. For example, the rotary speed reduction motor that is taken as an example of the driving unit 60 is mounted on the column 20, and the combined chain gear set 2 is mounted on a rotating output end of the rotary speed reduction motor, the plurality of chain gears 4 of the combined chain gear set 2 can be fixedly connected together, so that the driving unit 60 can drive the plurality of chain gears 4 of the combined chain gear set 2 to rotate synchronously, thereby driving the plurality of chain wheels 5 of the combined chain wheel set 3 fully meshed with to rotate synchronously. Since the combined chain wheel set 3 is mounted on the shaft 30, the shaft 30 and the photovoltaic module 50 supported thereon can be driven to rotate synchronously. The driving device comprises the driving unit 60 and the transmission device 1, the rotary speed reduction motor that is taken as an example of the driving unit 60 is controlled to rotate in the forward and reverse directions, so the photovoltaic tracking support 10 can track and drive according to the change of solar azimuth angle.

Compared with using the driving unit to drive the photovoltaic tracking support to track and rotate directly, using the above transmission device 1 enables that the specification of the driving unit 60 such as the rotary speed reduction motor selected can be smaller when the photovoltaic tracking support 10 is used to drive the photovoltaic module 50 of the same capacity, and the cost and energy consumption can be relatively lower. In addition, the photovoltaic module 50 can still be mounted on the portion of the shaft 30 where the driving device is mounted, so that the mounting arrangement of the photovoltaic module 50 on the shaft 30 of the photovoltaic tracking support 10 can be more compact.

With the maturity of photovoltaic power generation technology, the photovoltaic tracking support has been widely used. The transmission device mentioned above and the photovoltaic tracking support comprising the transmission device mentioned above will have a broad application prospect in the construction of photovoltaic power plants in the future.

Although the present invention is disclosed in the preferred embodiment, it is not intended to limit the invention, and any possible changes and modifications can be made by those skilled in the art without departing from the spirit and scope of the invention. Therefore, any modification, equivalent change and alternative made in accordance with the technical essence of the present invention without departing from the contents of the technical solution of the invention shall fall within the scope of protection defined by the claims of the invention.

## Claims

1. A transmission device for a photovoltaic tracking support which comprises a column and a shaft, the shaft being rotatably supported on the column and a photovoltaic module being supported by the shaft, wherein the transmission device comprises:
a combined chain gear set comprising a plurality of chain gears that are provided coaxially and with teeth in a staggered manner with each other; and
a combined chain wheel set comprising a plurality of chain wheels that are provided coaxially and in one-to-one correspondence with the plurality of chain gears respectively;
one of the combined chain gear set and the combined chain wheel set is provided rotatably on the column, the other one is connected to the shaft.

2. The transmission device according to claim 1, wherein
the combined chain gear set comprises a first chain gear and a second chain gear, a centreline of any one of tooth tips on the first chain gear overlaps with a centreline of any one of concave parts on the second chain gear.

3. The transmission device according to claim 1, wherein
radii of reference circles of the plurality of chain gears are the same.

4. The transmission device according to claim 3, wherein
numbers of teeth of the plurality of chain gears are the same.

5. The transmission device according to claim 1, wherein
the combined chain gear set comprises a first chain gear, a second chain gear and a third chain gear, a central angle corresponding to any two of the adjacent tooth tips on the first chain gear is divided into three equal portions by a centerline of any one of tooth tips on the second chain gear and a centreline of any one of tooth tips on the third chain gear.

6. The transmission device according to claim 1, wherein
the plurality of chain gears or the plurality of chain wheels provided on the other one are all sector wheels, connected below the shaft.

7. The transmission device according to claim 1, wherein
the plurality of chain gears are fixedly connected to each other; and/or
the plurality of chain wheels are fixedly connected to each other.

8. The transmission device according to claim 1, wherein
the combined chain wheel set is provided rotatably on the column, and the combined chain gear set is connected to the shaft.

9. A photovoltaic tracking support, comprising a column and a shaft, the shaft being rotatably supported on the column and a photovoltaic module being supported by the shaft, wherein the photovoltaic tracking support further comprises any one of the transmission devices according to claim 1 to 8.

10. The photovoltaic tracking support according to claim 9 wherein
the photovoltaic tracking support further comprises a driving unit for driving the one to rotate.
